# EUROPÄISCHE PATENTANMELDUNG

(11) **EP 1 447 056 A2**
(43) Veröffentlichungstag der Anmeldung: **18.08.2004**
(21) Anmeldenummer: 04002771.6
(22) Anmeldetag: 09.02.2004
(51) Int. Cl.: A61C 8/00, A61C 19/00

(54) **Verpackung für ein Dentalimplantat**

(30) Priorität: 12.02.2003 DE 10305948
(71) Anmelder: Heraeus Kulzer GmbH & Co.KG, 63450 Hanau (DE)
(72) Erfinder: Bressler, Christian, 60385 Frankfurt (DE); Clostermann, Volkhard-Hagen, 58097 Hagen (DE)
(74) Vertreter: Kühn, Hans-Christian

(57) **Zusammenfassung**

Die Erfindung betrifft eine standfeste ist und eine praktische Entnahme erlaubende Verpackung für ein Dentalimplantat mit einer starren Verkleidung und einem darin angeordneten Implantathalter, mit den Merkmalen, dass die Verkleidung auf zwei voneinander verschiedenen Ebenen und standfähig ist; dass sie eine Aufnahme für den Implantathalter, eine Öffnung zum Zugriff auf den Implantathalter und/oder eine in dem Implantathalter gehaltenes Implantat aufweist, und dass der Implantathalter eine Einbuchtung zur Aufnahme des Implantats aufweist.

## Beschreibung

Die Erfindung betrifft eine Verpackung für ein Dentalimplantat, insbesondere umfassend einen Implantathalter und eine Verkleidung.

Dentalimplantate werden in der Regel vorgefertigt vom Hersteller geliefert. Der Zahnarzt bzw. Kieferchirurg setzt sie in den menschlichen Kiefer ein. Zweckmäßigerweise werden die Implantate in sterilem Zustand geliefert. Für spezielle Implantate sind besondere Bohrer vorgesehen, die ebenfalls steril geliefert werden.

Verpackungen zur Aufnahme, Transport, Lagerung und Herausnahme von Dental-Implantaten oder zugehörigen Teilen wie Bohrern sind in diversen Ausführungen bekannt. Viele davon haben Röhrchenform und sind nicht standfest.

Es stellt sich die Aufgabe, eine Verpackung zu finden, die standfest ist und eine praktische und gegebenenfalls den sterilen Zustand bewahrende Entnahme erlaubt.

Erfindungsgemäß wird die Aufgabe gelöst durch eine Verpackung für ein Dentalimplantat mit einer starren Verkleidung und einem darin angeordneten Implantathalter, wobei die Verkleidung auf zwei voneinander verschiedenen Ebenen standfähig ist; sie eine Aufnahme für den Implantathalterund eine Öffnung zum Zugriff auf den Implantathalter und/oder ein in dem Implantathalter gehaltenes Implantat aufweist, und dass der Implantathalter eine Einbuchtung zur Aufnahme des Implantats aufweist.

Besonders vorteilhaft ist, dass man das Implantat steril und fest lagern kann, dass die Verpackung standfest und leicht zu öffnen ist, und dass das Implantat einfach und berührungsfrei entnehmbar ist. Berührungsfrei bedeutet dabei, dass das Implantat nicht mit der menschlichen Hand manipuliert zu werden braucht, sondern in sterilem Zustand mit demjenigen Werkzeug entnommen werden kann, mit dem es weiter manipuliert oder in den Kiefer eingesetzt wird.

In einer Ausführungsform ist der Halter aus der Verkleidung herausnehmbar und ebenso wie die Verkleidung auf zwei im wesentlichen senkrecht zueinander liegenden Ebenen standfähig. Dabei ist er vorteilhaft wie in Tischchen gestaltet, d.h. die Platte mit dem Schlitz besitzt entweder vier Füße oder zwei seitlich angebrachte Standplatten. Von Vorteil ist es dabei, wenn der Halter durch Einschieben in der Verkleidung befestigt werden kann und durch Rastmittel arretierbar ist. Umgekehrt ist es vorgesehen, dass die Rastmittel gelöst und der Halter wieder entfernt werden kann.

In einer weiteren Ausführungsform ist der Implantathalter in der Verkleidung im wesentlichen parallel zu einer der Standebenen befestigt. Dabei ist es von Vorteil, wenn er als Platte gestaltet ist, und für die Platte Führungen an der Verkleidung vorgesehen sind. Die Befestigung kann aber auch auf andere Weise, z.B. über eine druckknopfartige Einschnappvorrichtung erfolgen.

Die Platte, die in dieser Ausführungsform den Implantathalter darstellt, ist bevorzugt als Titanblech ausgestaltet.

Im Allgemeinen ist die Verkleidung mit Folie verschlossen, insbesondere mit einer Siegelfolie entlang einer Fläche versiegelt.

In einer Ausführungsform ist die Einbuchtung als sich verjüngender Schlitz zur Aufnahme des Implantats ausgestaltet, der aus elastischem Material gefertigt ist oder mit einer Lippe aus elastischem Material verkleidet ist.

In einer weiteren Ausführungsform ist die Einbuchtung mit zyklischen Aussparungen zur Aufnahme zylindrischer Formen versehen und federnd beweglich, so dass aufzunehmenden zylindrischen Teile ein- und ausrasten können.

Bevorzugte Ausführungsformen der Verpackung werden im Detail anhand der Figuren wie folgt beschrieben:

### Zeichnungen

Fig. 1 zeigt die Verkleidung 1 und darunter den darin einrastbaren Implantathalter 2.
Fig. 2 zeigt im Detail die prinzipielle Ausgestaltung des Implantathalters.
Fig. 3 zeigt die Verkleidung 1 mit darin eingeschobenem Implantathalter in Plattenform in zwei Ansichten. In Ansicht b sieht man das eingeklemmte Implantat.
Fig. 4 zeigt den entsprechenden Implantathalter in Plattenform.

In einer Ausführungsform sieht der Implantathalter 2, vorzugsweise aus Kunststoff, im wesentlichen wie ein Tischchen aus. Die Oberfläche weist eine Einbuchtung (Schlitz) 3 auf, die sich von außen nach innen verjüngt. Das Implantat 9 wird in der einfachsten Ausführung in diesen Schlitz 3 eingeklemmt. Der Implantathalter 2 wird seinerseits in eine ebenfalls standfeste Verkleidung 1 eingeschoben und gegebenenfalls mit einem Rastmittel 4 fixiert. Die Verkleidung 1 kann über die Fläche 5 steril versiegelt werden, vorzugsweise mit einer abziehbaren Folie. Die Folie verschließt mit der Verkleidung 1 die Verpackung zu einer sterilisierbaren Verpackung. Die Verkleidung 1 hat vorteilhaft im wesentlichen die Form eines diagonal halbierten Quaders, so dass auf den Ebenen 6 und 7 gestellt werden kann. Sie ist bevorzugt aus transparentem Kunststoff in der Art einer Blisterverpackung, versiegelt mit einer Aluminiumfolie.

Bei Gebrauch wird zunächst die Folie abgezogen. Danach kann unmittelbar das Werkzeug auf dem Implantat 9 eingeklinkt werden und das Implantat 9 entnommen werden. Alternativ kann der Implantathalter 2 vorher aus der Verpackung genommen werden. In diesem Fall ist der Implantathalter 2 zur Lösung des Rastmittels zusammendrückbar und mit entsprechenden Handgriffen ausgestattet. Alternativ kann auf das Rastmittel 4 verzichtet werden.

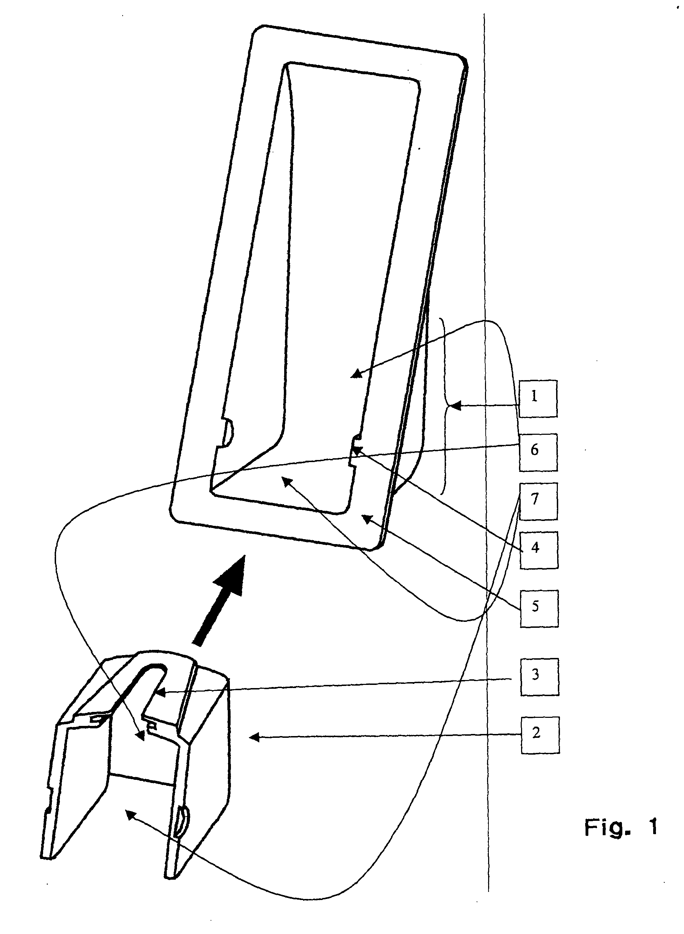

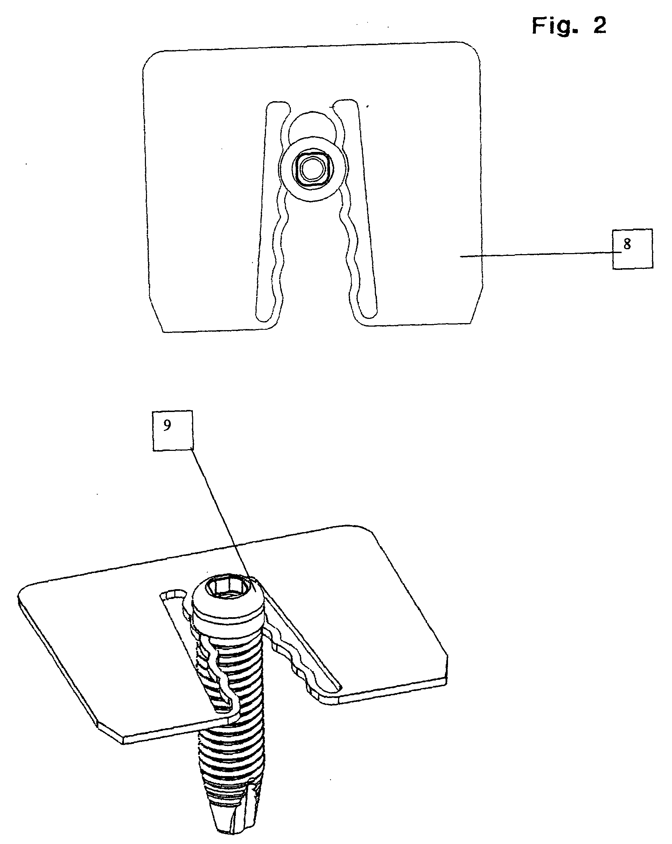

Der Schlitz 3 kann wie in Fig. 1 gezeigt ausgestaltet sein. Bei dieser Ausgestaltung klemmt das Implantat 9 einfach im Schlitz 3, bevor es entnommen wird. Entsprechend ist es für dauerhafteren Halt von Vorteil, wenn der Schlitz 3 mit einem weicheren Material ummantelt ist. Man kann auch eine Ausgestaltung wie in Fig. 2 gezeigt vorsehen. Dabei verjüngt sich der Schlitz 3 stufenweise, z.B. in der gezeigten Form eines Schneemanns. Damit wird es möglich, Implantate 9 und Halter 2 verschiedener vorgegebener Durchmesser (hier gezeigt, ⌀ Größe 1 bis 3) in 2 zu positionieren. Man kann etwa Bohrer und Implantat 9 in einem Kit zusammen verpacken. Die Implantate 9 oder Bohrer sitzen fest und sind dennoch leicht entnehmbar, entweder aufgrund der Elastizität des Kunststoffs, oder weil der Schlitz 3 elastisch federnd spreizbar ist. Der Implantathalter 2 kann auch ein separates Klemmteil zur Aufnahme des Implantats 9 enthalten, das wiederum den Schlitz 3 enthält. Dadurch ist es möglich, etwa den Halter 2 aus Kunststoff und das Klemmteil mit dem Schlitz 3 aus Titan zu fertigen. Das Klemmteil kann einen sich verjüngenden Schlitz 3 zur Aufnahme des Implantats 9 aufweisen, der aus elastischem Material besteht oder mit einer Lippe aus elastischem Material verkleidet ist. Es kann auch einen Schlitz 3 mit zyklischen Aussparungen zur Aufnahme zylindrischer Formen aufweisen, der federnd beweglich ist, so dass die zylindrischen Teile ein- und ausrasten können.

### Besondere Vorteile der Implantat-Verpackung (Ständer mit Schlitz 3 und Verkleidung 1 sind:

### Verkleidung 1:

- Die Verkleidung 1 ist in zwei Ebenen (zusätzlich zur Fläche 5) standfest: flach und aufrecht.
- Der Implantathalter 2 wird vorzugsweise in der Verkleidung 1 durch Einrasten gehalten.
- Mit einem Zahnarztwerkzeug kann das Implantat 9 direkt aus der Verkleidung 1 entnommen werden.

### Der Implantathalter (Ständer) 2

- Er kann als Aufnahme für verschiedene Implantatdurchmesser dienen (Fig. 2). Durch die Universalaufnahme für Implantathalter 2 und Bohrerhalter ist die Verpackung für das gesamte Implantatsystem (in Form eines sog. "Kit") verwendbar.
- Der Ständer hält das Implantat 9 nur an der polierten Oberseite.
- Ein fester Halt des Implantates 9 in der Aufnahme ergibt sich durch Formschluss.

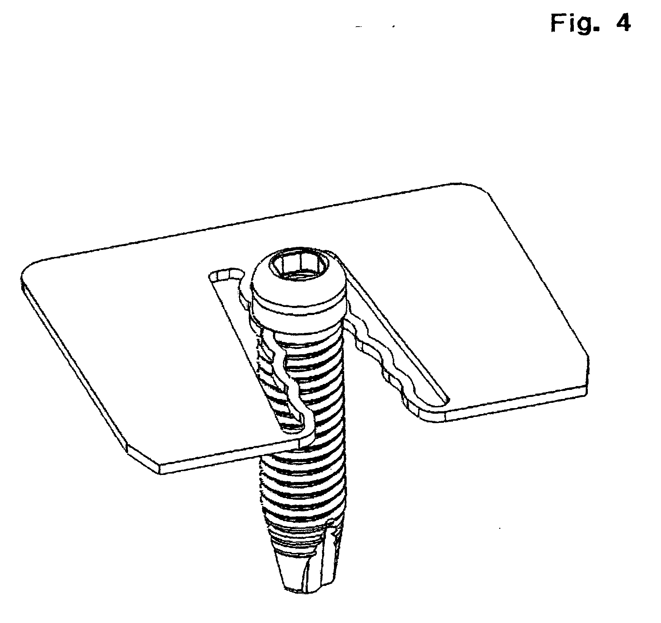

(In beispielhaften Ausgestaltungen passt sich das Material dem Durchmesser des Implantates 9 oder Bohrers an, oder der Schlitz 3 ist mit Rundungen zur Aufnahme zylindrischer Formen ausgestattet und federnd beweglich, so dass die zylindrischen Teile ein- und ausrasten (vgl. Fig. 4)).
- Der Implantathalter 2 kann aus der Verkleidung 1 entnommen werden und ist standfest aufstellbar.
- In diesem Fall kann das Implantat 9 mit einem Zahnarztwerkzeug aus dem Implantathalter 2 entnommen werden.
- Der Implantathalter 2 kann als Darreichung für die Hilfsperson oder den Zahnarzt verwendet werden.

Die Verkleidung 1 befindet sich vorteilhaft in einer Umverpackung. Die Umverpackung ist für gewöhnlich eine Papp-Faltschachtel, auf welcher Angaben über den Inhalt aufgedruckt sind.

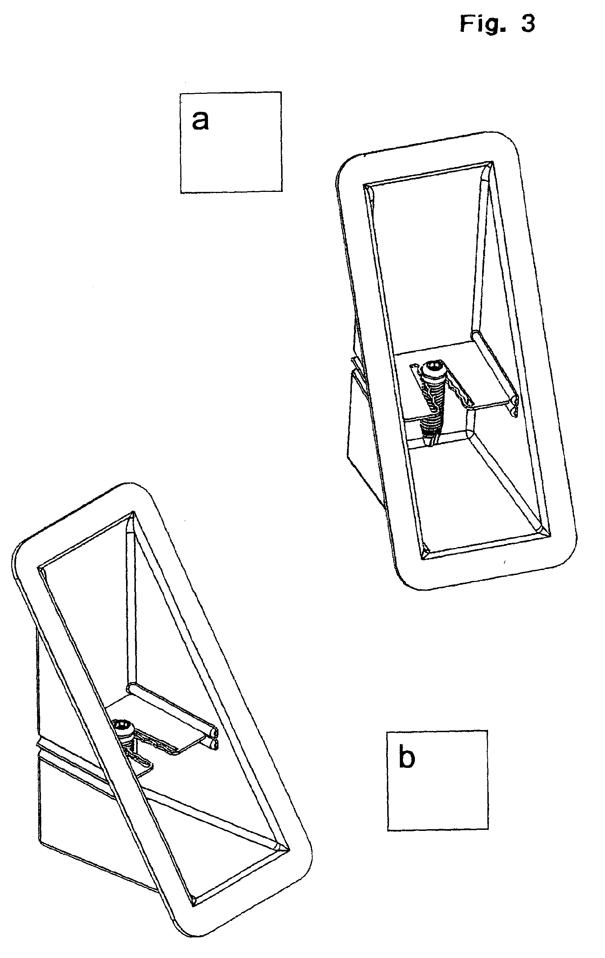

In einer weiteren Ausführungsform (Fig. 3) ist die Fläche mit dem Schlitz 3 als Titanblech ausgestaltet und fest in die Verkleidung 1 eingesteckt. Damit wird die Funktion eines separaten Tischchens nicht mehr verwirklicht. Allerdings ergeben sich Vorteile durch Vereinfachungen bei der Produktion. Der Schlitz 3 weist wieder zyklische Aussparungen zur Aufnahme zylindrischer Formen auf und ist federnd beweglich, so dass die zylindrischen Teile ein und ausrasten können (im Detail in Fig. 4 gezeigt).

Bevorzugt ist es weiterhin, wenn die Verpackung eines oder mehrere der folgenden Merkmale aufweist:
Das Implantat 9 kann mit einem Werkzeug entnommen werden, und zwar sowohl auf Ebene 6 als auch auf Ebene 7 stehend.
Die Ebenen 6 und 7 sind im wesentlichen senkrecht zueinander.
Die Verkleidung 1 und der Implantathalter 2 sind sterilisierbar.
Die Öffnung ist mit einer Folie verschlossen.
Der Implantathalter 2ist aus der Verkleidung 1 herausnehmbar und ebenso wie die Verkleidung 1 auf zwei verschiedenen Ebenen 6 und 7 standfähig.
Der Implantathalter 2 kann durch Einschieben in der Verkleidung 1 befestigt werden, ist durch Rastmittel 4 arretierbar, und kann wieder entfernt werden.
Die Einbuchtung 3 ist als sich verjüngender Schlitz zur Aufnahme des Implantats 9 ausgestaltet ist, der aus elastischem Material gefertigt ist oder mit einer Lippe aus elastischem Material verkleidet ist.
Der Implantathalter 2 ist in der Verkleidung 1 im wesentlichen parallel zu einer der Standebenen 6 und 7 befestigt.
Die Einbuchtung 3 ist mit zyklischen Aussparungen zur Aufnahme zylindrischer Formen versehen und federnd beweglich, so dass aufzunehmende zylindrischen Teile ein- und ausrasten können (Fig. 4). Die Aussparungen beschreiben, wie in Fig. 4 zu sehen, jeweils nur Teile einer Kreisform.
Der Implantathalter 2 ist als Titanblech ausgestaltet.

## Patentansprüche

1. Verpackung für ein Dentalimplantat mit einer starren Verkleidung und einem darin angeordneten Implantathalter, **dadurch gekennzeichnet, dass** die Verkleidung (1) auf zwei voneinander verschiedenen Ebenen (6) und (7) standfähig ist; dass sie eine Aufnahme für den Implantathalter (2), eine Öffnung zum Zugriff auf den Implantathalter (2) und/oder eine in dem Implantathalter (2) gehaltenes Implantat (9) aufweist, und dass der Implantathalter (2) eine Einbuchtung zur Aufnahme des Implantats (9) aufweist.

2. Verpackung nach Anspruch 1, **dadurch gekennzeichnet, dass** das Implantat (9) mit einem Werkzeug entnommen werden kann, und zwar sowohl auf Ebene (6) als auch auf Ebene (7) stehend.

3. Verpackung nach Anspruch 1 oder 2, **dadurch gekennzeichnet, dass** die Ebenen (6) und (7) im wesentlichen senkrecht zueinander sind.

4. Verpackung nach Anspruch 1 bis 3 **dadurch gekennzeichnet, dass** Verkleidung (1) und Implantathalter (2) sterilisierbar sind.

5. Verpackung nach Anspruch 1 bis 4, **dadurch gekennzeichnet, dass** die Öffnung mit einer Folie verschlossen ist.

6. Verpackung nach Anspruch 1, **dadurch gekennzeichnet, dass** der Halter aus der Verkleidung (1) herausnehmbar ist und ebenso wie die Verkleidung (1) auf zwei verschiedenen Ebenen (6) und (7) standfähig ist.

7. Verpackung nach Anspruch 6, **dadurch gekennzeichnet, dass** der Halter durch Einschieben in der Verkleidung (1) befestigt werden kann und durch Rastmittel arretierbar ist sowie wieder entfernt werden kann.

8. Verpackung nach Anspruch 6 bis 7, **dadurch gekennzeichnet, dass** die Einbuchtung als sich verjüngender Schlitz zur Aufnahme des Implantats (9) ausgestaltet ist, der aus elastischem Material gefertigt ist oder mit einer Lippe aus elastischem Material verkleidet ist.

9. Verpackung nach Anspruch 1 bis 5, **dadurch gekennzeichnet, dass** der Implantathalter (2) in der Verkleidung (1) im wesentlichen parallel zu einer der Standebenen (6) und (7) befestigt ist.

10. Verpackung nach Anspruch 9, **dadurch gekennzeichnet, dass** die Einbuchtung mit zyklischen Aussparungen zur Aufnahme zylindrischer Formen versehen und federnd beweglich ist.

11. Verpackung nach Anspruch 9 oder 10, **dadurch gekennzeichnet, dass** der Implantathalter (2) als Titanblech ausgestaltet ist.
